# EUROPÄISCHE PATENTSCHRIFT

(11) **EP 2 426 050 B1**
(45) Veröffentlichungstag und Bekanntmachung des Hinweises auf die Patenterteilung: **13.08.2014**
(21) Anmeldenummer: 11179248.7
(22) Anmeldetag: 30.08.2011
(51) Int. Cl.: B63H 25/52, F16C 33/12, F16C 17/03, F16C 17/06, F16C 43/02

(54) **Lagerelement eines Ruderlagers**
Bearing element of a rudder bearing
Elément de coussinet d'un palier de gouvernail

(30) Priorität: 01.09.2010 DE 102010036093
(43) Veröffentlichungstag der Anmeldung: 07.03.2012
(73) Patentinhaber: becker marine systems GmbH & Co. KG, 21079 Hamburg (DE)
(72) Erfinder: Kluge, Mathias, 22299 Hamburg (DE); Jandt, Monika, 21217 Seevetal (DE)
(74) Vertreter: Richter Werdermann Gerbaulet Hofmann

(56) Entgegenhaltungen:
- AT-B- 187 758
- DE-A1-102007 057 253
- DE-C3- 1 575 519
- DE-U- 1 921 887

## Beschreibung

Die Erfindung betrifft ein Lagerelement eines Ruderlagers zur Lagerung eines Ruderschaftes oder eines Ruderkokers eines Ruders eines Wasserfahrzeuges, insbesondere eines Schiffes.

Bekannte Ruder für Wasserfahrzeuge umfassen ein Ruderblatt und einen mit dem Ruderblatt verbundenen Ruderschaft, um den herum das Ruder drehbar ist. Der Ruderschaft ist im Allgemeinen mittels ein oder zwei Lager im Schiffskörper gelagert. Ein (oberes) Rudertraglager ist dabei am oberen, der im Inneren des Schiffes angeordneten Rudermaschine zugewandten Ende des Ruderschaftes angeordnet. Gegebenenfalls ist ein weiteres (unteres) Rudertraglager weiter in Richtung an dem anderen, ruderblattseitigen Ende des Ruderschaftes, insbesondere kurz vor dem Austritt des Ruderschaftes aus dem Schiffskörper bzw. dem Skeg, angeordnet. In der Praxis weisen verschiedene Ruderarten, beispielsweise Vollschweberuder, Halbschweberuder, in der Stevensohle gelagerte Ruder, etc., Rudertraglager bzw. Ruderschaftlager auf. Auch können Ruderanordnungen Ruderkoker aufweisen oder auch nicht. Der Ruderkoker ist ein mit der Schiffsstruktur verbundener und als Kragträger ausgebildeter Hohlkörper, der in das Innere des Ruderblattes hineinragt und innerhalb dessen ein Ruderschaft angeordnet ist. Es ist bekannt, dass zwischen Ruderkoker und Ruderschaft Lager, insbesondere im unteren Bereich, d. h. im von der Schiffsstruktur entfernt liegenden Bereich, angeordnet werden können, die insbesondere auch "Halslager" genannt werden. Auch ist es möglich, dass zusätzlich oder alternativ zur Lagerung des Ruderschaftes im Ruderkoker der Ruderkoker selbst am Ruderblatt mittels entsprechender Lager gelagert ist. In Bezug auf die vorliegende Erfindung ist der Begriff "Ruderlager" derart zu verstehen, dass dieser sämtliche Lager eines Ruderschaftes oder auch eines Ruderkokers umfassen kann, beispielsweise das obere Rudertraglager, das untere Rudertraglager, ein Halslager, Lager zwischen Ruderkoker und Ruderblatt, etc.

Aus dem Stand der Technik bekannte Ruderlager weisen normalerweise Radiallager auf bzw. bestehen aus einem Radiallager. Alternativ oder zusätzlich können die Ruderlager auch ein Axiallager umfassen. Grundsätzlich können Radial-und Axiallager jedoch auch getrennt voneinander in zwei separaten Lagern ausgebildet sein.

Das Dokument DE 1 921 887, das als nächstliegender Stand der Technik angesehen wird, beschreibt ein als Längs- und Quer Gleitlager ausgebildetes Ruderlager.

Ruderlager sind üblicherweise als Gleitlager ausgebildet, d. h., die normalerweise zwei zu lagernden Elemente eines Radial- oder auch Axiallagers eines Ruderlagers (Lagerelemente) bewegen sich direkt bzw. nur durch einen Schmierfilm getrennt aneinander vorbei. Es sind daher üblicherweise keine zusätzlichen Wälzkörper o. dgl. bei Ruderlagern vorzusehen. Die Radial- und/oder Axiallager bei Ruderlagern weisen üblicherweise jeweils zwei Lagerelemente auf, die gegeneinander bewegbar sind.

Durch die häufige Drehung des Ruderschaftes beim Ruderlegen im Laufe des Betriebes eines Ruders nutzen die Lagerelemente des Radial- und/oder des Axiallagers des Ruderlagers ab und müssen relativ häufig erneuert werden. Die Herstellung und der Einbau der häufig sehr großen und schweren Lagerelemente sind technisch aufwendig und dadurch kostspielig.

Daher ist es Aufgabe der vorliegenden Erfindung, ein Lagerelement für ein Ruderlager bzw. ein Ruderlager anzugeben, die einfacher ein- und ausgebaut bzw. kostengünstiger hergestellt bzw. gelagert werden können. Die Lösung dieser Aufgabe gelingt mit einem Lagerelement gemäß Anspruch 1 bzw. einem Ruderlager mit einem solchen Lagerelement.

Demnach wird erfindungsgemäß ein Lagerelement des Radial- oder Axiallagers eines Ruderlagers segmentiert ausgebildet und weist mindestens drei separate Segmente auf, die zur Bildung des Lagerelementes zusammengesetzt sind. Durch die Unterteilung des Lagerelementes in mindestens drei separate Segmente wird die Montage deutlich vereinfacht, da von den entsprechenden Montagepersonen nunmehr mindestens drei, im Vergleich zu einem einstückig ausgebildeten Lagerelement deutlich kleinere und leichtere Segmente zu verwenden sind. Diese einzelnen Segmente werden dann von der Montageperson um den Ruderschaft herum zu einem Lagerelement zusammengesetzt.

Die einzelnen Segmente des Lagerelementes sind als Ringsegmente ausgebildet. D. h., die einzelnen Ringsegmente sind Teile eines ringförmig ausgebildeten Lagerelementes, nämlich ein Lagerring bzw. eine ringförmige Lagerscheibe oder auch eine Lagerbuchse. Das aus den einzelnen Ringsegmenten zusammengesetzte Lagerelement ist homogen und in sich fixiert. Dies bedeutet, dass die einzelnen Ringsegmente nicht gegeneinander bzw. relativ zueinander bewegbar sind. Die einzelnen Ringsegmente sind somit relativ zueinander fixiert, so dass das einzelne Lagerelement im jeweiligen Lager gegebenenfalls als Ganzes bewegbar ist (falls dies in dem jeweiligen Lager so vorgesehen ist), jedoch nicht einzelne Ringsegmente unabhängig von den anderen. Die einzelnen Ringsegmente sind insbesondere nicht kippbar bzw. nicht drehbar ausgebildet. Ein in sich fixiertes, homogenes Lagerelement wird dadurch erreicht, dass die einzelnen Ringsegmente jeweils an wenigstens zwei weiteren Ringsegmenten anliegen und Verbindungsmittel vorgesehen sind, mit denen die nebeneinanderliegenden bzw. benachbarten Ringsegmente miteinander fest verbunden werden. Die Ausbildung als homogenes Lagerelement bedeutet, dass die einzelnen, miteinander verbundenen Ringsegmente einen vollständigen Lagerring bzw. eine vollständige Lagerbuchse bilden, die sich in ihrer Funktionsweise nicht bzw. nicht wesentlich von derjenigen eines einstückigen Lagerringes bzw. einstückigen Lagerbuchse unterscheidet. Entsprechend ist das Lagerelement auch nicht einstückig ausgebildet, sondern wird zusammengesetzt aus einer Vielzahl voneinander grundsätzlich unabhängiger Ringsegmente.

Die einzelnen Ringsegmente liegen an wenigstens zwei weiteren Ringsegmenten an, d. h., sie weisen gemeinsame Berührungspunkte mit diesen wenigstens zwei weiteren Ringsegmenten auf. Bevorzugterweise sind die Ringsegmente derart ausgestaltet, dass sie jeweils flächig an einem benachbarten Ringsegment anliegen, wobei dann bevorzugt ein Ringsegment zwischen zwei benachbarten Ringsegmenten liegt und an beiden flächig anliegt. In dieser Weise bilden die einzelnen Ringsegmente einen zusammenhängenden Ringverbund, der entweder als Lagerring, z. B. in Form einer ringförmigen Lagerscheibe, oder auch als Lagerbuchse ausgebildet ist.

Das Lagerelement ist derart ausgebildet, dass es als Ganzes gegenüber einem weiteren Element des Lagers, in dem es angeordnet ist, bewegbar ist bzw. umgekehrt.

Die Ausbildung eines solchen Lagerelementes ist aus dem Stand der Technik nicht bekannt. Die bekannten Lagerelemente sind vielmehr einstückig ausgebildet. Insbesondere sind die Ringsegmente fest miteinander verbunden und bilden somit zusammen ein alleinstehendes Lagerelement, das ohne weitere Mittel in sich fixiert ist.

Durch die Aufsplittung des Lagerelementes in mindestens drei Teilsegmente werden auch die Lagerhaltung der Lagerelemente vereinfacht und die Herstellungskosten reduziert. Im Hinblick auf die Reduzierung der Herstellungs- und Lagerkosten ist ferner zu beachten, dass die Lagerelemente normalerweise recht groß sein können, beispielsweise einen Durchmesser von bis zu einem Meter aufweisen und hierdurch kleinere, einzelne Segmente einfacher zu handhaben bzw. herzustellen sind.

Das Lagerelement ist als Lagerring, insbesondere bei einem Axiallager, oder auch als Lagerbuchse oder -hülse, insbesondere bei einem Radiallager, ausgebildet. Grundsätzlich können derartige Lagerelemente in beliebiger Weise in mindestens drei einzelne Ringsegmente unterteilt werden. Bei einer Lagerbuchse sind die einzelnen Segmente in einer Draufsicht, ebenso wie bei einem Lagerring, als Ringsegmente ausgebildet, die von der oberen bis zur unteren Seite der Lagerbuchse durchgehend verlaufen. Es ist vorgesehen, die einzelnen Ringsegmente derart vorzugeben, dass die Ringsegmente um den Ruderschaft herum zu einem Lagerelement zusammensetzbar sind, bzw. zusammengesetzt werden können. Insofern verlaufen die Trennlinien zwischen den einzelnen Ringsegmenten im eingebauten Zustand in der Regel annähernd vertikal und nicht etwa horizontal.

Die einzelnen Ringsegmente eines Lagerelementes können grundsätzlich durch jedes geeignete, aus dem Stand der Technik bekannte Verfahren hergestellt werden. Insbesondere können die einzelnen Ringsegmente durch Fräsen und Schneiden aus einem einstückigen Lagerelement bzw. sonstigen Werkstücken oder auch im Spritzgussverfahren direkt als einzelne Ringsegmente hergestellt werden.

Grundsätzlich sind die einzelnen Ringsegmente für das Zusammensetzen zu einem einzelnen Lagerelement durch geeignete Verbindungsmittel miteinander verbunden. Auch kann die Dimensionierung bzw. Form der einzelnen Ringsegmente derart gewählt werden, dass beim Zusammensetzen der Ringsegmente diese mittels Form- oder Kraftschluss miteinander verbunden sind.

Besonders bevorzugt ist es, dass das Lagerelement eine Vielzahl von einzelnen Ringsegmenten aufweist, da dann die hierdurch erreichten Vorteile, wie die Vereinfachung der Handhabung und die Reduzierung der Herstellungskosten, besonders stark zur Geltung kommen. Die Vielzahl von Ringsegmenten kann beispielsweise eine Anzahl von 5 bis 100 Stück, 10 bis 65 Stück, 64 Stück, 40 bis 80 Stück, 50 bis 70 Stück oder auch 15 bis 40 Stück sein, die jeweils ein einziges Lagerelement bilden. Ferner sind beispielsweise auch noch die folgenden Mengen an Ringsegmenten pro Lagerelement beispielsweise denkbar: 5 bis 30 Stück, 10 bis 20 Stück, 10 bis 25 Stück, 15 bis 20 Stück und 16 Stück.

Es sind Verbindungsmittel zur Verbindung der Ringsegmente miteinander vorzusehen. Durch die Verbindungsmittel können die Ringsegmente derart miteinander fixiert werden, dass diese einen festen Verbund und somit ein einzelnes, festes Lagerelement bilden. Die Verbindungsmittel können insbesondere zur Herstellung einer formschlüssigen und/oder zur Herstellung einer kraftschlüssigen Verbindung zwischen den Ringsegmenten ausgebildet sein. Insbesondere kann die hergestellte Verbindung sowohl form- als auch kraftschlüssig sein. Die Verbindungsmittel sind bevorzugterweise derart gestaltet, dass mit ihnen eine lösbare Verbindung herstellbar ist, d. h., die Ringsegmente sind lösbar miteinander verbunden. Hierdurch können die Lagerelemente bei Wartungsarbeiten u. dgl. leicht wieder in einzelne Ringsegmente demontiert werden.

Sollten die Verbindungsmittel zur Herstellung einer kraftschlüssigen Verbindung vorgesehen sein, so ist es bevorzugt, dass diese Verbindungsmittel elastisch ausgebildet sind bzw. elastische Mittel umfassen. Durch die Vorsehung solcher elastischen Mittel ist die Herstellung einer kraftschlüssigen Verbindung auf besonders einfache Art und Weise herstellbar.

Grundsätzlich können die Verbindungsmittel jedwede zur Verbindung einzelner Ringsegmente geeignete und aus dem Stand der Technik bekannte Mittel umfassen. In einer bevorzugten Ausführungsform weisen die Verbindungsmittel Ausnehmungen in den Ringsegmenten und in diese Ausnehmungen jeweils einsetzbare Gegenstücke auf. Miteinander in Eingriff stehende Ausnehmungen und Gegenstücke sind beispielsweise jeweils an verschiedenen, benachbart zueinander angeordneten Ringsegmenten vorgesehen bzw. fest angebracht. Alternativ kann das Gegenstück als separates Bauteil, welches nicht an einem Ringsegment fest angebracht ist, ausgebildet sein, wobei dann das Gegenstück vorteilhafterweise in mindestens zwei Ausnehmungen verschiedener Ringsegmente einbringbar ist, um diese beiden Ringsegmente miteinander zu verbinden. Hierbei sind die Gegenstücke bevorzugt derart ausgebildet, dass sie formschlüssig in die Ausnehmungen einsetzbar sind. Grundsätzlich könnte auch ein kraftschlüssiger Einsatz der Gegenstücke in die Ausnehmungen denkbar sein. Beispielsweise kann das Gegenstück ein vom Ringsegment vorstehender Steg oder eine vorstehende Nocke o. dgl. sein, die in die einzelnen Ausnehmungen eingreift. Zweckmäßigerweise sind die Ausnehmungen und auch die Gegenstücke jeweils im Bereich der einzelnen Kanten bzw. der Seitenbereiche der Ringsegmente vorgesehen, mit denen die Ringsegmente an ein weiteres Ringsegment angrenzen bzw. anstoßen.

Die Ausnehmung kann grundsätzlich jede Art von Ausnehmung im Segmentkörper sein, beispielsweise eine Nut, eine Durchbrechung, ein Sackloch, eine Vertiefung o. dgl. Sowohl die Ausnehmung als auch die Gegenstücke sind in einer Ausführungsform einstückig am jeweiligen Ringsegment ausgebildet, so dass hier keine zusätzlichen Komponenten o. dgl. vorgesehen werden müssen. Der Ringsegmentkörper ist in der Regel völlig, d. h. nicht hohl, ausgebildet.

Vorteilhafterweise umfassen die Verbindungsmittel eine Rastverbindung. Hierdurch kann vorteilhafterweise, z. B. im Rahmen der Wartung, die Verbindung zwischen zwei Ringsegmenten durch Entrasten der Rastverbindung wieder gelöst werden. Die Rastverbindung kann grundsätzlich in jedweder geeigneten Art und Weise ausgebildet sein. Bevorzugterweise umfasst sie wenigstens ein elastisches Rastelement. Im Falle des Vorsehens von Ausnehmungen und in diese eingreifbare Gegenstücke als Verbindungsmittel kann die Rastverbindung beispielsweise durch eine Nut oder sonstige Vertiefung und ein in die Nut bzw. die Vertiefung einbringbares, korrespondierendes Rastteil, welches vorzugsweise elastisch ausgebildet ist, ausgebildet sein.

In einer weiteren bevorzugten Ausführungsform weisen die Gegenstücke jeweils mindestens eine Hinterschneidung auf. Dies kann insbesondere dadurch erreicht werden, dass die Gegenstücke einen schwalbenschwanzartigen Endbereich aufweisen bzw. insgesamt schwalbenschwanzartig ausgebildet sind. Alternativ können beispielsweise T-förmige Endbereiche der Gegenstücke oder auch nur allgemein eine Verbreiterung des Endbereiches des Gegenstückes vorgesehen sein. Wenn die Ausnehmungen entsprechend, d. h. an die Form der Gegenstücke angepasst, ausgebildet sind, dann kann durch die Vorsehung von Hinterschneidungen bzw. des Schwalbenschwanzes auf einfache Weise eine formschlüssige Verbindung erreicht werden. Die verbesserte Festigkeit der Verbindung kann dadurch erreicht werden, dass entweder das Gegenstück oder der Bereich der Ausnehmung oder beides eine gewisse Elastizität aufweist. Alternativ oder zusätzlich können Ausnehmungen und Gegenstücke in Form einer Übermaßpassung zur Herstellung einer kraftschlüssigen Verbindung ausgeführt werden.

In einer Ausführungsform weist jedes Ringsegment eine gleiche Anzahl, insbesondere zwei, von Ausnehmungen und Gegenstücken auf, wobei die Ausnehmungen und Gegenstücke eines Ringsegmentes bevorzugt gegenüberliegend am jeweiligen Ringsegment angeordnet sind. Die anderen Ringsegmente sind vorteilhafterweise identisch bezüglich ihrer Form und Anordnung der Ausnehmungen und Gegenstücke ausgebildet, so dass die Gegenstücke eines ersten Ringsegmentes in die Ausnehmung eines zweiten Ringsegmentes eingreifen können und die Gegenstücke eines dritten Ringsegmentes in die Ausnehmungen des ersten Ringsegmentes. Die Ringsegmente liegen jeweils an wenigstens zwei weiteren Ringsegmenten an. Bei solchen Ausführungen sind im ersten Anlagebereich die Gegenstücke und im zweiten Anlagebereich die Ausnehmungen oder umgekehrt vorzusehen.

Bei einer alternativen Ausführungsform sind an den einzelnen Ringsegmenten jeweils nur Ausnehmungen und keine Gegenstücke vorgesehen, wobei jeweils eine Ausnehmung eines Ringsegmentes vorteilhafterweise benachbart bzw. angrenzend an eine weitere Ausnehmung eines anliegenden bzw. benachbarten Ringsegmentes angeordnet ist. Bei dieser Ausführungsform sind zusätzlich als separate Bauteile ausgebildete Gegenstücke vorzusehen, die jeweils wenigstens in zwei Ausnehmungen verschiedener, benachbart zueinander angeordneter Ringsegmente eingreifen und die Ringsegmente somit gegeneinander fixieren.

Zur Verbesserung des Kraftschlusses kann im Gegenstück ein Hohlraum, eine Ausnehmung oder eine Durchbrechung vorgesehen sein. Hierdurch kann die Elastizität des Gegenstückes insofern erhöht werden, dass dieser beim Einführen in eine korrespondierende Ausnehmung zusammendrückbar ist und sich nach dem Zusammendrücken in der Ausnehmung ausdehnt und kraftschlüssig an den Seitenwänden der Ausnehmung zur Anlage kommt. Dies ist insbesondere zur Herstellung von kraftschlüssigen Verbindungen und/oder Rastverbindungen vorteilhaft.

In einer weiteren bevorzugten Ausführungsform weisen die Ringsegmente eine innere, in der Regel bogenförmige oder gradlinig verlaufende Kante, eine äußere, in der Regel bogenförmig oder gradlinig verlaufende Kante und zwei seitliche, in der Regel geradlinig verlaufende Kanten, auf. Die innere Kante eines Ringsegmentes bildet zusammen mit den weiteren inneren Kanten der weiteren Ringsegmente die innere Ringkante. Entsprechend bildet die äußere Kante die äußere Ringkante. Derartige Ringsegmente sind insbesondere zur Herstellung eines als Lagerring ausgebildeten Lagerelements vorteilhaft. Grundsätzlich können derartige Ringsegmente aber auch für eine Ringbuchse verwendet werden, wobei die Ringsegmente dann vorteilhaft in Axialrichtung der Buchse von oben nach unten durchgängig verlaufen. Durch eine derartige Ausbildung kann ferner die kraftschlüssige Verbindung der einzelnen Ringsegmente zu einem einzelnen Lagerelement hin auf einfache Weise verbessert werden, da sich durch die aneinander anliegenden Seitenkanten der einzelnen Ringsegmente eine Art kraftschlüssige Keilverbindung ergeben kann.

Die beiden seitlichen Kanten eines oder mehrerer der Ringsegmente können unter einem Winkel zueinander verlaufen. Grundsätzlich können diese jedoch auch parallel zueinander verlaufend ausgebildet sein. Auch kann der Winkel bei allen Ringsegmenten gleich sein oder auch unterschiedlich. Der Winkel ist bevorzugt in der Weise auszurichten, dass die innere Kante der einzelnen Ringsegmente kürzer ist als die äußere Kante. Ferner kann bevorzugt zumindest eine der seitlichen Kanten annähernd unter einem rechten Winkel zur inneren und/oder zur äußeren Kante verlaufen. Hierdurch kann der Herstellungsprozess weiter vereinfacht werden. So können beispielsweise herstellerseitig Ringsegmente mit verschiedenen Winkeln vorgegeben werden, die dann je nach Bedarf zusammengesetzt werden können, um ein bestimmtes, gewünschtes Lagerelement zu erreichen. Insofern müssen nicht alle Ringsegmente für ein bestimmtes Lagerelement maßgefertigt werden, sondern die Fertigung kann auch auf Vorrat erfolgen.

In einer bevorzugten Ausführungsform umfassen ein oder mehrere, bevorzugt alle, Ringsegmente eines Lagerelementes einen Werkstoff, der einen Festschmierstoff aufweist. Derartige Festschmierstoffe verleihen dem Lagerelement Selbstschmierungseigenschaften, wodurch das gesamte Lager, in das das Lagerelement eingesetzt wird, ein selbstschmierendes Lager oder auch "Festkörperreibungslager" wird. Derartige Lager kommen ohne zusätzliche Schmierung bzw. Schmiermittel aus, da in dem aus ihnen hergestellten Material eingebettete, feste Schmierstoffe (Festschmierstoffe) vorhanden sind, die während des Betriebes durch Mikroverschleiß an die Oberfläche gelangen und somit Reibung und Verschleiß der Lager senken. Für die Ausbildung solcher Lagerelemente kommen insbesondere Kunststoffe bzw. Kunststoffverbunde und/oder Keramikbaustoffe zum Einsatz. Beispiele für derartige Stoffe sind PTFE (Polytetrafluorethylen) und ACM (Acrylatkautschuk). Auch können graphithaltige Werkstoffe oder Verbundstoffe zur Herstellung der Ringsegmente der Lagerelemente verwendet werden. Hierdurch kann der Aufbau des Rudertraglagers, in den das erfindungsgemäße Lagerelement einzusetzen ist, weiter vereinfacht werden, da keine zusätzlichen Mittel zur Bereitstellung eines Schmierfilms o. dgl. und keine externen Schmierstoffe zur Verfügung gestellt werden müssen. Auch unter ökologischen Aspekten ist dies vorteilhaft, da keine Schmierstoffe, wie Fett oder Öl, aus dem Lager in die Umwelt gelangen können. Ferner ist vorteilhaft, dass im Gegensatz zu herkömmlichen, häufig aus Metall bestehenden Lagerelementen, die beispielsweise aus Bronze hergestellt sind, die Gefahr des Festfressens bei selbstschmierenden Lagern nahezu ausgeschlossen ist. Des Weiteren sind derartige Lager extrem wartungsarm.

Unabhängig von den selbstschmierenden Eigenschaften des Lagerelementes können einzelne oder mehrere Ringsegmente, bevorzugt alle, des Lagerelementes einen nicht-metallischen, vorzugsweise elastische Eigenschaften aufweisenden Werkstoff umfassen. Dieser Werkstoff kann ein Kunststoff, insbesondere einer der vorgenannten Kunststoffe, sein.

In einer weiteren bevorzugten Ausführungsform weist das Lagerelement eine hohe zulässige Flächenpressung auf. Insbesondere sollte die Flächenpressung bei mindestens 40 N/mm², bevorzugt bei 75 N/mm², besonders bevorzugt bei mindestens 90 N/mm² liegen. Dies kann zum einen durch die Vorsehung entsprechender Verbindungsmittel zwischen den einzelnen Ringsegmenten erreicht werden, die eine zusätzliche Versteifung des Lagerelementes ermöglichen. Auch kann eine günstige Materialwahl die zulässige Flächenpressung positiv beeinflussen.

In einer weiteren bevorzugten Ausführungsform bestehen ein oder mehrere, bevorzugt alle Ringsegmente aus einem Werkstoff, der eine erste Komponente A und eine zweite Komponente B umfasst. Die Komponente A ist dabei ein thermoplastisches Polyester. Die Komponente B kann vorzugsweise ein elastischer Stoff, beispielsweise ein Elastomer, sein, wobei der Werkstoff vorteilhafterweise zu mindestens 70 %, besonders bevorzugt zu mindestens 85 %, aus der Komponente A besteht. Hierdurch kann ein besonders geeigneter Werkstoff für die Herstellung des Lagerrings bzw. der einzelnen Ringsegmente erreicht werden, da eine hohe zulässige Flächenpressung, eine gute Verarbeitbarkeit in einzelne Ringsegmente und eine gute einstückige Herstellung von Ausnehmungen und korrespondierenden Gegenstücken ermöglicht wird. Der Werkstoff kann ausschließlich aus den Komponenten A und B bestehen.

In einer weiteren bevorzugten Ausführungsform ist in einem Grenzbereich, in dem jeweils zwei Ringsegmente aneinander anliegen bzw. angrenzen, in einem oder in beiden der einander angrenzenden Ringsegmente eine Ausnehmung vorgesehen. Die Ausnehmung kann durchgehend sein oder nur bereichsweise als Vertiefung vorliegen. In eine solche Ausnehmung kann beispielsweise ein Werkzeug o. dgl. eingebracht werden, wenn ein aus Ringsegmenten bestehender Lagerring wieder demontiert werden soll. Hierdurch wird die Demontage vereinfacht. Besonders bevorzugt ist die Ausnehmung in Bezug auf die Kontaktkanten zwischen zwei Ringsegmenten in etwa mittig angeordnet.

Des Weiteren wird die der Erfindung zugrundeliegende Aufgabe durch ein Ruderlager, insbesondere ein oberes Rudertraglager, gelöst, das ein erfindungsgemäßes Lagerelement aufweist. Bevorzugt kann bei einem solchen Ruderlager ein Axiallager und/oder ein Radiallager als selbstschmierendes Lager ausgebildet sein. Vorteilhafterweise umfasst das Ruderlager sowohl Axial- als auch Radiallager.

Die Erfindung wird weiter anhand von in der Zeichnung dargestellten Ausführungsbeispielen erläutert. Es zeigen schematisch:
- Fig. 1: eine Schnittansicht eines Ruderschaftes mit Ruderkoker und einem oberen Traglager,
- Fig. 2: eine Detailansicht des Traglagers aus Fig. 1,
- Fig. 3: eine Draufsicht auf einen segmentierten Lagerring des Traglagers aus Fig. 1 und 2,
- Fig. 4: eine Einzelansicht eines Ringsegmentes des Lagerringes aus Fig. 3,
- Fig. 5: eine perspektivische Ansicht einer segmentierten Lagerbuchse des Traglagers aus den Fig. 1 und 2,
- Fig. 6: eine Seitenansicht der Lagerbuchse aus Fig. 5,
- Fig. 6A: eine Detailansicht der Lagerbuchse aus Fig. 6,
- Fig. 7: eine perspektivische Einzelansicht eines Ringsegmentes der Lagerbuchse aus den Fig. 5 und 6, und
- Fig.8: eine perspektivische Einzelansicht des Gegenstückes der Lagerbuchse aus den Fig. 5 und 6.

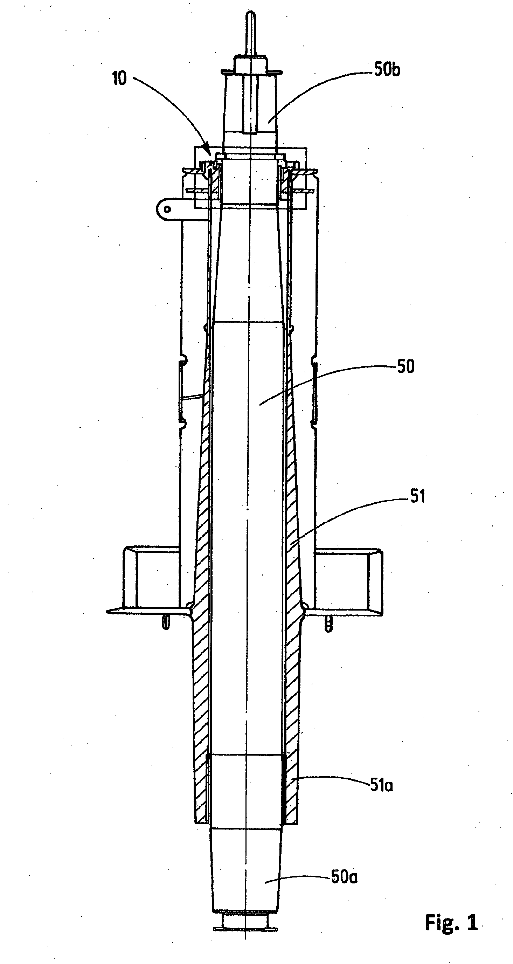

Fig. 1 zeigt eine Schnittansicht eines Ruderschaftes 50, um den herum ein Ruderkoker 51 angeordnet ist. Im eingebauten Zustand sind das untere Ruderschaftende 50a und das untere Kokerende 51a in ein Ruderblatt (hier nicht dargestellt) eingeführt und das untere Ruderschaftende 50a ist mit dem Ruderblatt verbunden. Am oberen, im Schiffskörper im Bereich der Rudermaschine (hier nicht dargestellt) angeordneten Ruderschaftende 50b ist ein Traglager 10 angeordnet. Grundsätzlich können auch Ruderanordnungen ohne Ruderkoker Traglager aufweisen.

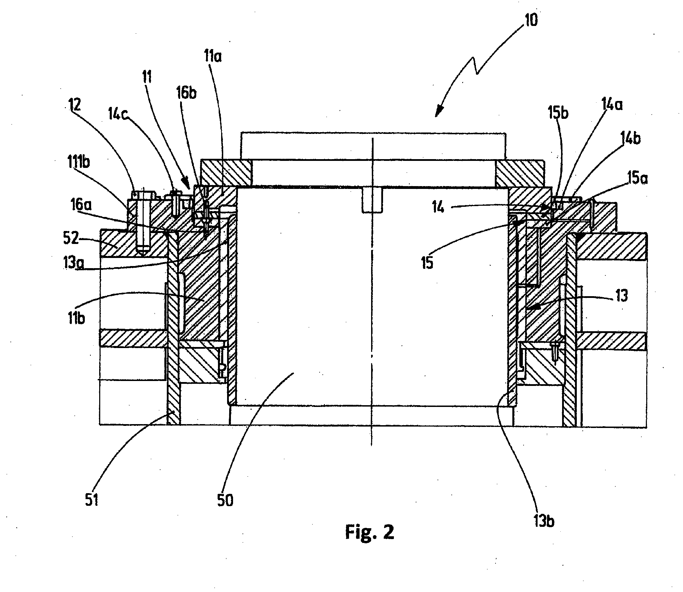

Fig. 2 zeigt in einer Detaildarstellung das Traglager 10 aus der Fig. 1 im Schnitt. Das Traglager 10 umfasst ein Lagergehäuse 11, das wiederum aus einem oberen Gehäusedeckel 11a und einem unteren Gehäusegrundkörper 11b besteht. Der Gehäusedeckel 11a und der Gehäusegrundkörper 11b können beispielsweise aus Stahl hergestellt sein. Der Gehäusegrundkörper 11b ist in der Art einer zylindrischen Hülse ausgebildet, an dessen oberen, äußeren Randbereich ein etwa 90° nach außen vorspringender, als Flansch ausgebildeter, umlaufender Befestigungsabschnitt 111b vorgesehen ist. Im Befestigungsabschnitt 111b sind in regelmäßigen Abständen Löcher bzw. Durchbohrungen vorgesehen, durch die hindurch der Gehäusegrundkörper 11b mittels Bolzen 12 mit dem Schiffskörper 52 verbunden ist. Im Inneren des Gehäusegrundkörpers 11b ist ein Radiallager 13 vorgesehen, das eine Lagerbuchse 13a und eine Ruderschafthülse bzw. einen Ruderschaftüberzug 13b umfasst. Die Lagerbuchse 13a und die fest auf dem Ruderschaft 50 aufsitzende Ruderschafthülse 13b bilden die beiden zueinander beweglichen Lagerpartner (Lagerelemente) des Radiallagers 13. Die zylindrische Lagerbuchse 13a liegt mit ihrem Außenmantel am Innenmantel des Gehäusegrundkörpers 11b an und kann mit dem Gehäusegrundkörper 11b, beispielsweise mittels Kaltdehnens, auch "Eineisen" genannt, verbunden sein. An der Oberseite des Befestigungsabschnittes 111b des Gehäusegrundkörpers 11b und angrenzend an den Gehäusedeckel 11a ist eine umlaufende Nut 14 vorgesehen, innerhalb derer ein Wellendichtring 14a angeordnet ist. Der Wellendichtring 14a bzw. die Nut 14 wird nach oben hin von einem Ringdeckel 14b abgedeckt, der mittels Bolzen bzw. Schrauben 14c mit dem Befestigungsabschnitt 111b verbunden ist.

Des Weiteren umfasst das Traglager 10 ein Axiallager 15, das eine erste Ringscheibe 15a und eine an der ersten Ringscheibe 15a anliegende zweite Ringscheibe 15b umfasst. Die erste und die zweite Ringscheibe 15a, 15b bilden somit ein Lagerpaar aus zwei gegeneinander bewegbaren Lagerelementen des Axiallagers 15. Die erste Ringscheibe 15a ist mittels mehrerer, umlaufend angeordneter Schrauben 16a mit dem Gehäusegrundkörper 11b verbunden, wohingegen die zweite Ringscheibe 15b mittels mehrerer, umlaufend verteilt angeordneter Schrauben 16b mit dem Gehäusedeckel 11a verbunden ist. Da der Gehäusedeckel 11a fest mit dem Ruderschaft 50 verbunden ist, dreht sich dieser mit dem Ruderschaft 50 mit. Entsprechend dreht sich auch die zweite Ringscheibe 15b bei Drehung des Ruderschaftes 50 mit und sie dreht sich somit auch relativ zur ersten, feststehenden Ringscheibe 15a. Der Gehäusedeckel 11a, der Gehäusegrundkörper 11b, die beiden Ringscheiben 15a, 15b, die Lagerbuchse 13a sowie auch die Ruderschafthülse 13b sind alle koaxial zum Ruderschaft 50 angeordnet.

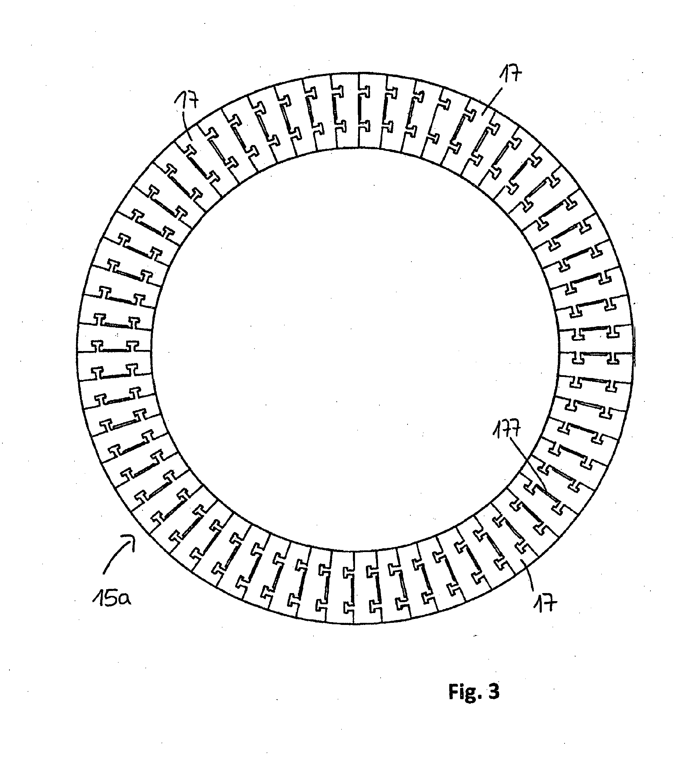

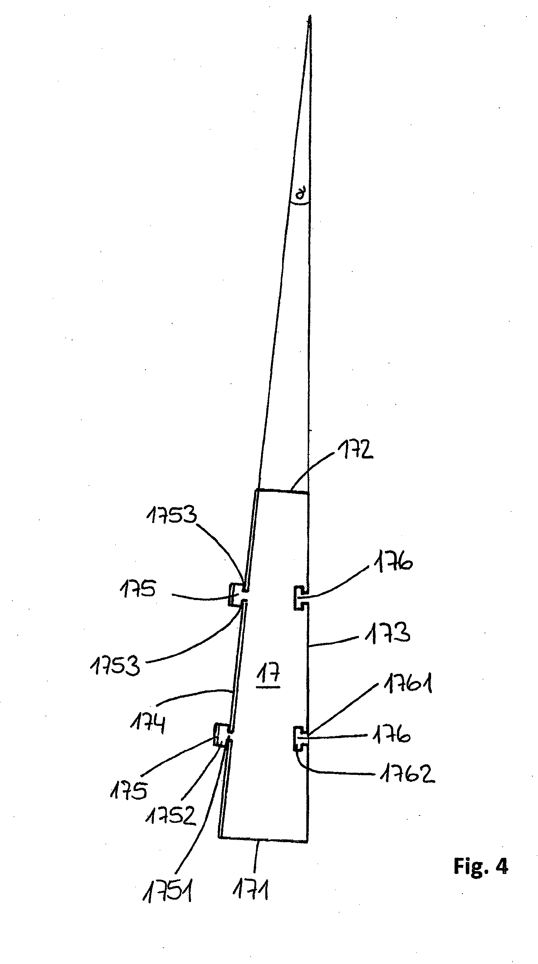

Fig. 3 und 4 zeigen die erste Ringscheibe 15a des Axiallagers 15 des Traglagers 10 in einer Draufsicht. Es ist erkennbar, dass sich das Lagerelement (erste Ringscheibe) 15a aus einer Vielzahl von einzelnen Ringsegmenten 17 zusammensetzt. Die Ringsegmente 17 sind als Ringsegmente ausgebildet. Die Ringsegmente 17 sind aus einem Kunststoff gebildet, der ein Festschmierstoff umfasst. Das andere, korrespondierende Lagerelement 15b (zweite Ringscheibe) des Axiallagers 15 ist bevorzugt aus Edelstahl ausgebildet. Hierdurch ergibt sich eine besonders gute Werkstoffkombination für ein selbstschmierendes Lager. Der in Fig. 3 gezeigte Lagerring 15a setzt sich insgesamt aus sechzig einzelnen Ringsegmenten 17 zusammen, die sich zu einem homogenen Lagerring zusammenfügen. Die einzelnen Ringsegmente 17 weisen eine äußere Kante 171, eine innere Kante 172 und zwei seitliche Kanten 173, 174 auf. Weitere Außenkanten sind nicht vorgesehen. Die innere und äußere Kante 172, 171 sind leicht bogenförmig ausgebildet, wobei diese bei anderen Ausführungsformen auch geradlinig verlaufen können. Die Seitenkanten 173, 174 verlaufen im Wesentlichen auch geradlinig bzw. sind geradlinig ausgerichtet. Die Seitenkanten 173, 174 der Ringsegmente 17 verlaufen nicht parallel zueinander, sondern unter einem Winkel α . Beim in Fig. 3 dargestellten Lagerring 15a sind alle Ringsegmente 17 identisch ausgebildet. Jedoch kann insbesondere in einer anderen Ausführungsform der Winkel α zwischen einzelnen Ringsegmenten eines Lagerringes bzw. eines Lagerelementes variiert werden. Insbesondere können solche Ringsegmente verwendet werden, die im Wesentlichen parallel verlaufende Seitenkanten haben. Die Ringsegmente 17 sind derart angeordnet, dass ihre Innen- und Außenkanten 171, 172 zu jeweils benachbarten Ringsegmenten im Wesentlichen bündig abschließen. Die Länge der einzelnen Ringsegmente 17 ist jeweils identisch.

An ihrer Seitenkante 174 weisen die Ringsegmente 17 jeweils zwei Gegenstücke 175 auf, die T-förmig ausgebildet sind. Gegenüberliegend auf der anderen Seitenkante 173 sind zwei korrespondierende Ausnehmungen 176 vorgesehen, die jeweils ein T-förmiges Gegenstück 175 aufnehmen können. In Bezug auf die Längsrichtung sind jeweils eine Ausnehmung 176 und ein Gegenstück 175 auf selber Höhe angeordnet. Auch sind die Gegenstücke 175 und die Ausnehmung 176 bezüglich ihres Abstandes zueinander und ihres Abstandes zu den Außenkanten 172, 173 gleichmäßig über ihre jeweilige Seitenkante 173, 174 verteilt angeordnet. Die Ringsegmente 17 grenzen mit ihren Seitenkanten 173, 174 jeweils an ein weiteres Ringsegment 17, insgesamt also an zwei, an, wobei die Gegenstücke 175 eines ersten Ringsegmentes jeweils in entsprechende Ausnehmungen 176 eines zweiten Ringsegmentes eingreifen, wohingegen in die Ausnehmungen 176 des ersten Ringsegmentes Gegenstücke 175 eines dritten Ringsegmentes eingreifen. Durch die T-förmige Ausbildung der Gegenstücke 175 weisen diese einen von der Seitenkante 174 vorspringenden schmalen Steg 1751 auf, an den sich ein breiterer Quersteg 1752 anschließt. Durch die Verbreiterung bilden die der Seitenkante 174 zugewandten Bereiche des Quersteges 1752 Hinterschneidungen 1753. Die Ausnehmungen 176 weisen entsprechend eine von der Seitenkante 173 nach innen verlaufende Schmalstelle 1761 und eine sich daran anschließende Verbreiterung 1762 auf. Die Gegenstücke 175 und die Vertiefungen bzw. Ausnehmungen 176 können passgenau oder als Übermaßpassung ausgebildet sein. Grundsätzlich wäre auch eine Spielpassung möglich, wobei diese vorliegend eher nicht vorteilhaft ist. An der Seitenkante 173 zwischen den beiden Ausnehmungen 176 ist bei den Ringsegmenten 17 des in Fig. 3 gezeigten Lagerringes 15a jeweils eine Ausnehmung 177 bzw. Einziehung nach innen vorgesehen, die parallel zur Seitenkante 173 verläuft. Die Ausnehmung 177 kann durch das gesamte Ringsegment nach unten hindurch verlaufen oder auch nur in Teilbereichen. Insbesondere ist die Ausnehmung 177 dafür geeignet, dass ein Werkzeug in sie hineingeführt wird, um gegebenenfalls einen segmentierten Lagerring 15a leichter demontieren zu können. So können einzelne Ringsegmente 17 relativ leicht von oben in andere Ringsegmente eingesteckt bzw. aus diesen nach oben wieder hinausgezogen werden.

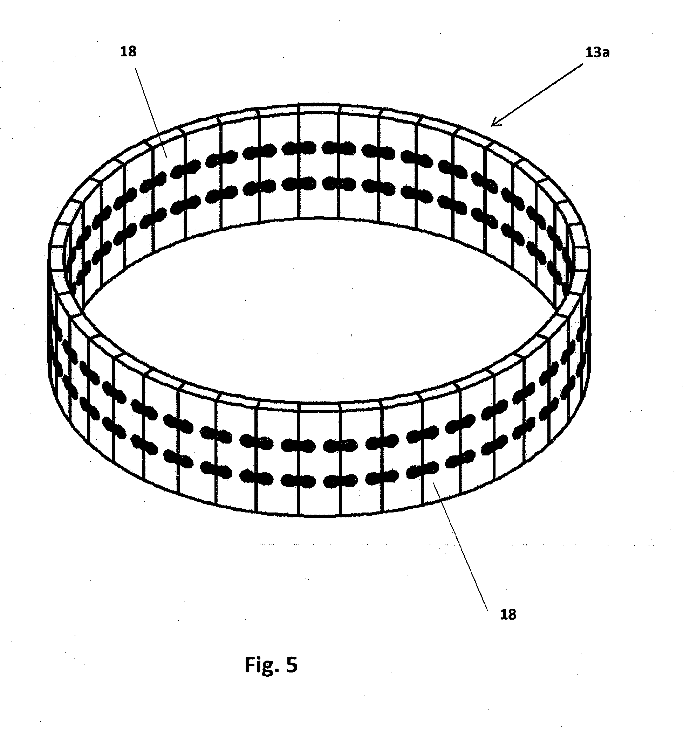

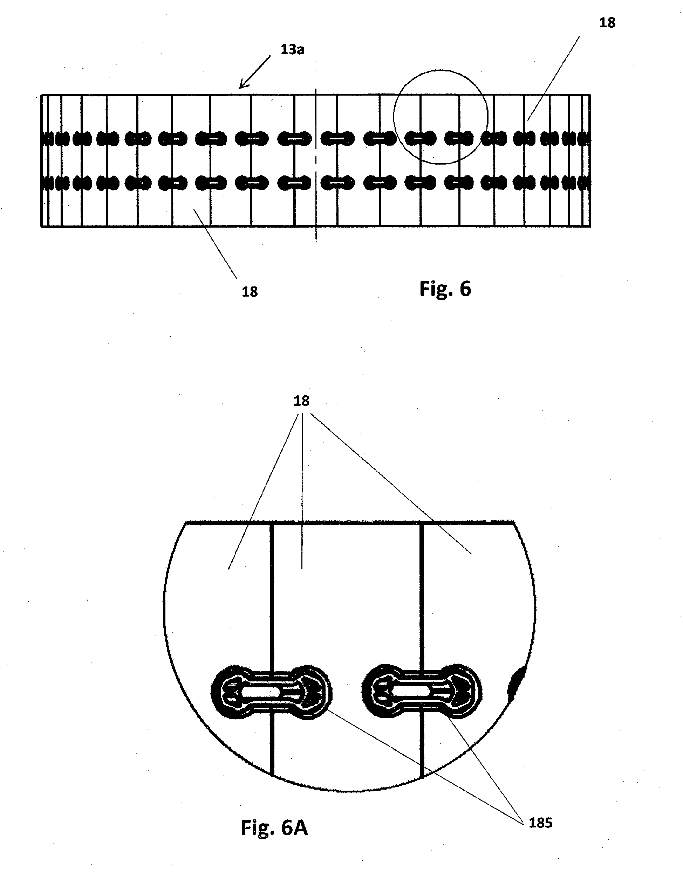

In den Fig. 5, 6 und 6A ist jeweils die Lagerbuchse 13a des Radiallagers 13 des Traglagers 10 dargestellt. Die Lagerbuchse 13a besteht aus vierzig einzelnen Ringsegmenten 18, wobei jedes einzelne Segment jeweils direkt an zwei weiteren Ringsegmenten 18 anliegt und jeweils mit diesen mittels aus Gegenstücken 185 und damit korrespondierenden Ausnehmungen 186 bestehenden Verbindungsmittel fest verbunden ist. Insgesamt ergibt sich damit eine in sich geschlossene, fixierte und homogene Lagerbuchse, die in ihren Funktionen denen einer einstückigen Lagerbuchse grundsätzlich entspricht. Grundsätzlich wäre es auch möglich, alternativ oder zusätzlich die Ruderschafthülse 13b als segmentierte Lagerbuchse auszubilden. Ähnlich wie beim segmentierten Lagerring bzw. der Ringscheibe aus den Fig. 3 und 4 sind auch hier die Ringsegmente 18 aus einem Kunststoff gebildet, der einen Festschmierstoff umfasst. Die Ruderschafthülse 13b, zu der sich die Lagerbuchse 13a relativ bewegt bzw. umgekehrt, ist bevorzugt aus Edelstahl ausgebildet. Zwischen zwei Ringsegmenten 18 sind jeweils zwei beabstandet voneinander angeordnete Gegenstücke 185 angeordnet, die jeweils in zwei Ausnehmungen 186 eingreifen, wobei die zwei Ausnehmungen 186 an unterschiedlichen, nämlich benachbarten Ringsegmenten 18 vorgesehen sind.

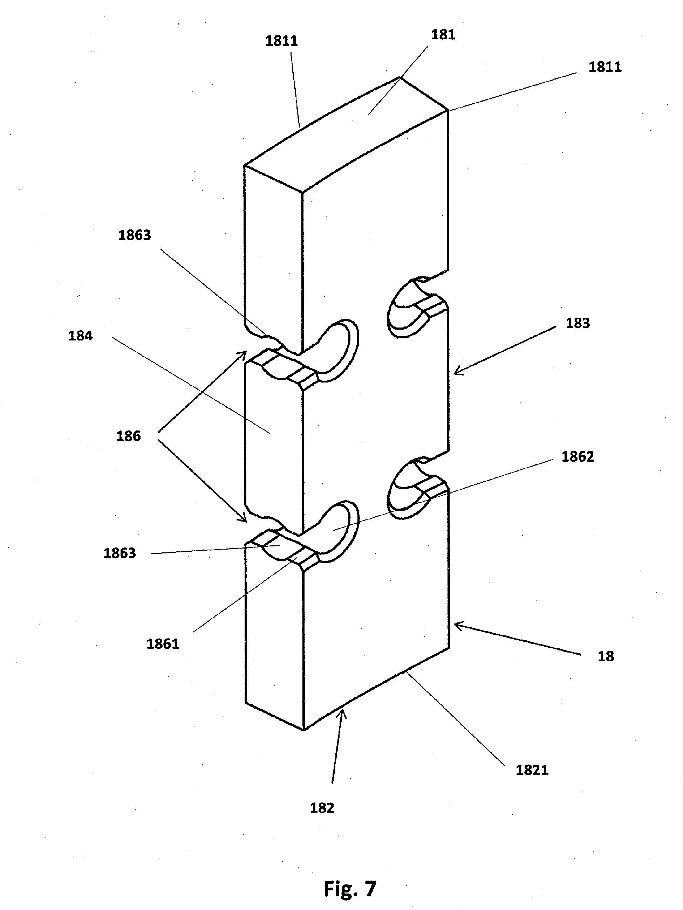

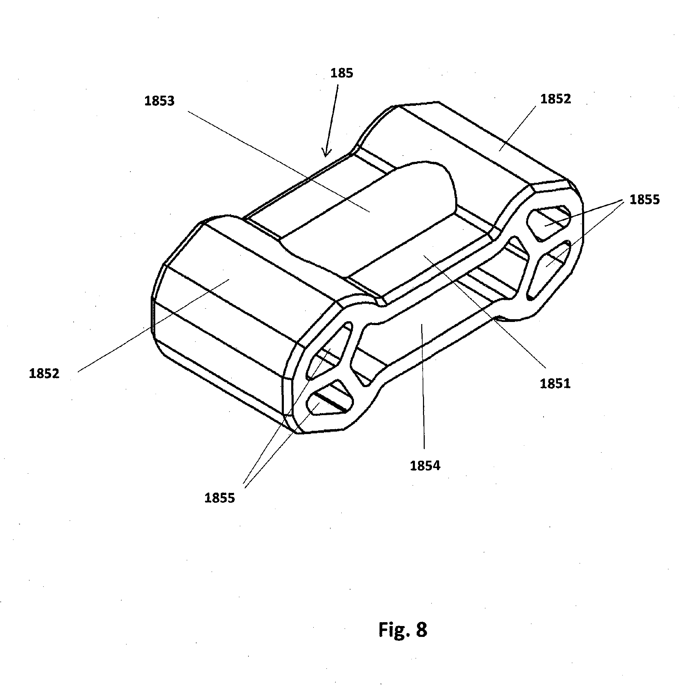

In der Fig. 7 ist eine perspektivische Einzeldarstellung eines Ringsegmentes 18 und in der Fig. 8 eine perspektivische Darstellung eines einzelnen Gegenstückes 185 abgebildet. Das Ringsegment 18 weist eine stirnseitige äußere Fläche 181, eine stirnseitige innere Fläche 182 und zwei an den Schmalseiten angeordnete seitliche Flächen 183, 184 auf. Sämtliche Flächen 181, 182, 183, 184 sind eben ausgebildet und stehen jeweils in einem etwa 90° Winkel zu ihren zwei benachbarten Flächen. Insofern sind die beiden seitlichen Flächen 183, 184 und die beiden inneren bzw. äußeren Flächen 181, 182 jeweils parallel zueinander ausgerichtet. Bei der in den Fig. 5 und 6 dargestellten Lagerbuchse 13a, sind alle Ringsegmente 18 identisch ausgebildet. Mit ihren seitlichen Flächen 183, 184 liegen die einzelnen Ringsegmente 18 jeweils an benachbarten Ringsegmenten vollflächig an. Die Längskanten 1811, 1821 der inneren und äußeren Stirnfläche 181, 182 sind jeweils leicht bogenförmig ausgebildet, so dass sich sämtliche Ringsegmente 18 zu einer geschlossenen, in der Draufsicht kreisrunden bzw. zylindrischen Buchse 13a zusammenfügen können. In den Seitenflächen 183, 184 sind jeweils zwei Ausnehmungen 186 vorgesehen, die alle vier identisch ausgebildet sind. Die einzelnen Ausnehmungen 186 sind auf beiden Seiten jeweils im gleichen Abstand zu ihrer Partnerausnehmung angeordnet und befinden sich jeweils auf etwa einem Drittel bzw. zwei Drittel der Gesamthöhe des Ringsegmentes 18. Bezüglich ihrer Form verlaufen sie von der Seitenfläche 183, 184 aus nach innen, zunächst mit einer Schmalstelle 1861, die sich im weiteren Verlauf zu einer Verbreiterung 1862 verbreitert, die gleichzeitig den Endbereich der Ausnehmung 186 darstellt. Die Verbreiterung 1862 hat in der seitlichen Ansicht eine etwa stecknadelkopfartige Form. In der Schmalstelle 1861 ist etwa mittig und parallel zur Querrichtung des Ringsegmentes 18 eine Nut bzw. Vertiefung 1863 vorgesehen. Diese Nut 1863 ist sowohl im unteren als auch im oberen Randbereich der Schmalstelle 1861 vorgesehen.

Das Gegenstück 185 weist einen mittleren Steg 1851 auf. An beiden Endbereichen des mittleren Stegs 1851 in Längsrichtung des Gegenstückes 185 betrachtet, schließt sich jeweils ein das Gegenstück 185 abschließender Endkopf 1852 an, der gegenüber dem Steg 1851 verbreitert ist, bzw. eine größere Breite aufweist. Die Endköpfe 1852 sind derart ausgestaltet, dass sie jeweils formschlüssig in eine Verbreiterung 1862 einer Ausnehmung 186 eingreifen können. Somit kann ein Gegenstück 185 in zwei aneinander liegende Ausnehmungen 186 zweier verschiedener, jedoch benachbart zueinander bzw. anliegend zueinander angeordneter Ringsegmente 18 eingreifen. Der mittlere Steg 1851 greift dann in die beiden Schmalstellen 1861 der Ausnehmungen 186 ein und hat in seinem mittleren Bereich in Längsrichtung des Gegenstückes 185 zu jeder Seite jeweils einen nach außen vorspringenden und parallel zu den Außenkanten verlaufenden Wulst 1853. Diese Wulste 1853 sind zum Eingriff in die Nuten 1863 der Ausnehmung 186 ausgebildet. Der mittlere Steg 1851 besteht aus zwei parallelen Außenwänden, zwischen denen ein Hohlraum 1854 vorgesehen ist. Im Inneren der Endköpfe 1852 sind jeweils zwei weitere, von einer Stirnseite zur anderen durchgehende, kanalförmige Hohlräume 1855 vorgesehen. Durch die Ausbildung des Gegenstückes 185 aus einem elastische Eigenschaften aufweisenden Material und/oder die Vorsehung der Hohlräume 1854, 1855 weist das Gegenstück 185 leicht elastische bzw. federnde Eigenschaften auf. So können beispielsweise beim Einführen des Gegenstückes 185 in eine Ausnehmung 186 die beiden äußeren Seitenwände des mittleren Stegs 1851 leicht zusammengedrückt werden, so dass der Wulst 1853 in die Nut 1863 einrasten kann. Somit bilden der Wulst 1853 und die Nut 1863 zusammen eine lösbare Rastverbindung.

### Bezugszeichenliste

- 10: Traglager
- 11: Lagergehäuse
- 11a: Gehäusedeckel
- 11b: Gehäusegrundkörper
- 111b: Befestigungsabschnitt
- 12: Bolzen
- 13: Radiallager
- 13a: Lagerbuchse
- 13b: Ruderschafthülse
- 14: Nut
- 14a: Wellendichtring
- 14b: Ringdeckel
- 14c: Schraube
- 15: Axiallager
- 15a: erste Ringscheibe
- 15b: zweite Ringscheibe
- 16a, 16b: Schrauben
- 17: Ringsegment/Lagerring
- 171: äußere Fläche
- 172: innere Fläche
- 173: seitliche Fläche
- 174: seitliche Fläche
- 175, 178: Gegenstück
- 1751: Steg
- 1752: Quersteg
- 1753: Hinterschneidungen
- 176, 179: Ausnehmung
- 1761: Schmalstelle
- 1762: Verbreiterung
- 177: Ausnehmung
- 18: Ringsegment/Lagerbuchse
- 181: äußere Fläche
- 1811: Längskante
- 182: innere Fläche
- 1821: Längskante
- 183: seitliche Fläche
- 184: seitliche Fläche
- 185: Gegenstück
- 1851: mittlerer Steg
- 1852: Endkopf
- 1853: Wulst
- 1854, 1855: Hohlraum
- 186: Ausnehmung
- 1861: Schmalstelle
- 1862: Verbreiterung
- 1863: Nut

- 50: Ruderschaft
- 50a: unteres Schaftende
- 50b: oberes Schaftende
- 51: Ruderkoker
- 51a: unteres Kokerende
- 52: Schiffskörper

## Patentansprüche

1. Lagerelement, nämlich ein Lagerring (15a, 15b) oder eine Lagerbuchse (13a, 13b), eines Ruderlagers (10) zur Lagerung eines Ruderschaftes (50) oder eines Ruderkokers (51) eines Ruders eines Wasserfahrzeugs, wobei das Ruderlager (10) als Radiallager (13) oder als Axiallager (15) ausgebildet ist,
wobei das Lagerelement (15a, 15b, 13a, 13b) segmentiert ausgebildet ist und mindestens drei separate Ringsegmente (17) umfasst, die jeweils zu einem homogenen, in sich fixierten Lagerelement (15a, 15b, 13a, 13b) zusammengesetzt sind, wobei die einzelnen Ringsegmente (17) jeweils an zwei weiteren Ringsegmenten (17) anliegen, und wobei die Ringsegmente (17) mittels Verbindungsmittel miteinander verbunden sind.

2. Lagerelement gemäß Anspruch 1,
**dadurch gekennzeichnet,**
**dass** das Lagerelement (15a, 15b, 13a, 13b) eine Vielzahl von Ringsegmenten (17), insbesondere 5 bis 100 Stück, bevorzugt 10 bis 65 Stück, besonders bevorzugt 15 bis 40 Stück, aufweist.

3. Lagerelement gemäß Anspruch 1 oder 2,
**dadurch gekennzeichnet,**
**dass** die Verbindungsmittel zur Herstellung einer formschlüssigen und/oder kraftschlüssigen Verbindung zwischen den Ringsegmenten (17) ausgebildet sind, wobei bevorzugt die Verbindungsmittel zur Herstellung einer kraftschlüssigen Verbindung elastische Mittel umfassen.

4. Lagerelement gemäß einem der vorhergehenden Ansprüche,
**dadurch gekennzeichnet,**
**dass** die Verbindungsmittel eine Rastverbindung, insbesondere umfassend eine Ausnehmung (186) und ein korrespondierendes Gegenstück (185), aufweisen.

5. Lagerelement gemäß einem der vorhergehenden Ansprüche,
**dadurch gekennzeichnet,**
**dass** die Verbindungsmittel Ausnehmungen (176, 186) in den Ringsegmenten (17) und in die Ausnehmung (176, 186) form- und/oder kraftschlüssig einsetzbare Gegenstücke (175, 185) umfassen.

6. Lagerelement gemäß Anspruch 5,
**dadurch gekennzeichnet,**
**dass** die Gegenstücke (175) jeweils an einem Ringsegment (17) vorgesehen sind oder dass die Gegenstücke (185) zum Eingriff in wenigstens zwei Ausnehmungen (176) benachbarter Ringsegmente (17) ausgebildet sind.

7. Lagerelement gemäß Anspruch 6,
**dadurch gekennzeichnet,**
**dass** die Gegenstücke (175, 185) mindestens eine Hinterschneidung (1753) aufweisen, wobei die Gegenstücke (175, 185) bevorzugt einen schwalbenschwanzartigen Endbereich aufweisen.

8. Lagerelement gemäß Anspruch 6 oder 7,
**dadurch gekennzeichnet,**
**dass** jedes Ringsegment (17) eine gleiche Anzahl, insbesondere zwei, von Ausnehmungen (176) und Gegenstücken (175) aufweist, wobei die Ausnehmungen (176) und Gegenstücke (175) eines Ringsegmentes (17) bevorzugt gegenüberliegend angeordnet sind.

9. Lagerelement gemäß einem der Ansprüche 6 bis 8,
**dadurch gekennzeichnet,**
**dass** im Gegenstück (175, 185) ein Hohlraum, eine Ausnehmung oder eine Durchbrechung vorgesehen ist.

10. Lagerelement gemäß einem der vorhergehenden Ansprüche,
**dadurch gekennzeichnet,**
**dass** die Ringsegmente (17) mit einer inneren, bogenförmig oder geradlinig verlaufenden Kante (172), mit einer äußeren, bogenförmig oder geradlinig verlaufenden Kante (171) und mit zwei seitlichen, im Wesentlichen geradlinig verlaufenden Kanten (173, 174) ausgebildet sind.

11. Lagerelement gemäß Anspruch 10,
**dadurch gekennzeichnet,**
**dass** die beiden seitlichen Kanten (173, 174) zumindest eines der, bevorzugt mehrerer, Ringsegmente (17) unter einem Winkel (α) zueinander verlaufen, insbesondere derart, dass die innere Kante (172) kürzer ist als die äußere Kante (171), wobei bevorzugt eine der seitlichen Kanten (173, 174) annähernd unter einem rechten Winkel zur inneren und zur äußeren Kante (171, 172) verläuft.

12. Lagerelement gemäß einem der vorhergehenden Ansprüche,
**dadurch gekennzeichnet,**
**dass** ein oder mehrere, bevorzugt alle, Ringsegmente (17) des Lagerelements (15a, 15b, 13a, 13b) einen Werkstoff umfassen, der einen Festschmierstoff aufweist, und/oder
**dass** ein oder mehrere, bevorzugt alle, Ringsegmente (17) des Lagerelements (15a, 15b, 13a, 13b) einen nicht-metallischen, vorzugsweise elastische Eigenschaften aufweisenden, Werkstoff, insbesondere Kunststoff, umfassen und bevorzugt vollständig aus dem nicht-metallischen Werkstoff bestehen.

13. Lagerelement gemäß einem der vorhergehenden Ansprüche,
**dadurch gekennzeichnet,**
**dass** das Lagerelement (15a, 15b, 13a, 13b) eine hohe zulässige Flächenpressung, insbesondere von mindestens 40 N/mm², bevorzugt von mindestens 75 N/mm², besonders bevorzugt von mindestens 90 N/mm², aufweist.

14. Lagerelement gemäß einem der vorhergehenden Ansprüche,
**dadurch gekennzeichnet,**
**dass** ein oder mehrere, bevorzugt alle, Ringsegmente (17) aus einem Werkstoff bestehen, der eine Komponente A und eine Komponente B umfasst, wobei die Komponente A ein thermoplastisches Polyester ist und die Komponente B insbesondere ein elastischer Stoff, bevorzugt ein Elastomer, ist, wobei der Werkstoff bevorzugt zu mindestens 70 %, besonders bevorzugt zu mindestens 85 %, aus der Komponente A bestehen.

15. Lagerelement gemäß einem der vorhergehenden Ansprüche,
**dadurch gekennzeichnet,**
**dass** in einem Grenzbereich, in dem jeweils zwei Ringsegmente (17) aneinander angrenzen, in einen oder in beiden der aneinander angrenzenden Ringsegmente (17) eine Ausnehmung (177) vorgesehen ist.

16. Ruderlager (10), insbesondere oberes Rudertraglager (10), zur Lagerung eines Ruderschaftes (50) oder eines Ruderkokers (51) eines Ruders eines Wasserfahrzeugs, insbesondere Schiff,
**dadurch gekennzeichnet,**
**dass** das Ruderlager (10) ein Lagerelement (15a, 15b, 13a, 13b) gemäß einem der vorhergehenden Ansprüche aufweist.

17. Ruderlager gemäß Anspruch 16,
**dadurch gekennzeichnet,**
**dass** ein Axiallager (15) des Ruderlagers (10) und/oder ein Radiallager (13) des Ruderlagers (10) das Lagerelement (15a, 15b, 13a, 13b) umfasst, wobei insbesondere das Axiallager (15) und/oder das Radiallager (13) als selbstschmierendes Lager ausgebildet ist.

## Claims

1. A bearing element, namely a bearing ring (15a, 15b) or a bearing bush (13a, 13b), of a rudder bearing (10) for mounting a rudder stock (50) or a rudder trunk (51) of a rudder of a watercraft, wherein the rudder bearing (10) is configured as a radial bearing (13) or as an axial bearing (15),
wherein the bearing element (15a, 15b, 13a, 13b) is configured to be segmented, and comprises at least three separate annular segments (17), which are each combined to form a homogeneous, inherently fixed bearing element (15a, 15b, 13a, 13b), wherein the individual annular segments (17) each abut against two further annular segments (17) and wherein the annular segments (17) are interconnected by connecting means.

2. The bearing element according to claim 1,
**characterized in that**
the bearing element (15a, 15b, 13a, 13b) comprises a plurality of annular segments (17), in particular 5 to 100 segments, preferably 10 to 65 segments, particularly preferably 15 to 40 segments.

3. The bearing element according to claim 1 or 2,
**characterized in that**
the connecting means are configured to produce a positive and/or a non-positive connection between the annular segments (17), wherein preferably the connecting means comprise elastic means for making a non-positive connection.

4. The bearing element according to any one of the preceding claims,
**characterized in that**
the connecting means comprise a latching connection, in particular including a recess (186) and a corresponding counterpart (185).

5. The bearing element according to any one of the preceding claims,
**characterized in that**
the connecting means comprises recesses (176, 186) in the annular segments (17) and counterparts (175, 185) which can be inserted positively or non-positively in the recess (176, 186).

6. The bearing element according to claim 5,
**characterized in that**
the counterparts (175) are each provided on an annular segment (17) or that the counterparts (185) are configured for engagement in at least two recesses (176) of adjacent annular segments (17).

7. The bearing element according to claim 6,
**characterized in that**
the counterparts (175, 185) have at least one undercut (1753), wherein the counterparts (175, 185) preferably have a swallowtail-like end region.

8. The bearing element according to claim 6 or 7,
**characterized in that**
each annular segment (17) has a same number, in particular two, of recesses (176) and counterparts (175), wherein the recesses (176) and counterparts (175) of one annular segment (17) are preferably arranged opposite to one another.

9. The bearing element according to any one of claims 6 to 8,
**characterized in that**
a cavity, a recess or an aperture is provided in the counterpart (175, 185).

10. The bearing element according to any one of the preceding claims,
**characterized in that**
the annular segments (17) are configured with an inner, arcuate or rectilinearly running edge (172), an outer arcuate or rectilinearly running edge (171), and two lateral, substantially rectilinearly running edges (173, 174).

11. The bearing element according to claim 10,
**characterized in that**
the two lateral edges (173, 174) of at least one of the, preferably severel, annular segments (17) run at an angle (α) with respect to one another, in particular in such a manner that the inner edge (172) is shorter than the outer edge (171), wherein preferably one of the lateral edges (173, 174) runs approximately at a right angle to the inner and to the outer edge (171, 172).

12. The bearing element according to any one of the preceding claims,
**characterized in that**
one or several, preferably all, of the annular segments (17) of the bearing element (15a, 15b, 13a, 13b) comprise a material which comprises a solid lubricant and/or
that one or several, preferably all, of the annular segments (17) of the bearing element (15a, 15b, 13a, 13b) comprise a non-metallic material preferably having elastic properties, in particular plastic, and preferably consist completely of the non-metallic material.

13. The bearing element according to any one of the preceding claims,
**characterized in that**
the bearing element (15a, 15b, 13a, 13b) has a high permissible surface pressure, in particular of at least 40 N/mm², preferably of at least 75 N/mm², particularly preferably of at least 90 N/mm².

14. The bearing element according to any one of the preceding claims,
**characterized in that**
one or more, preferably all, of the annular segments (17) consist of a material which comprises a component A and a component B, wherein component A is a thermoplastic polyester and component B is in particular an elastic material, preferably an elastomer, wherein the material preferably consists of at least 70%, particularly preferably at least 85% of component A.

15. The bearing element according to any one of the preceding claims,
**characterized in that**
in a boundary region in which two annular segments (17) adjoin one another, a recess (177) is provided in one or both of the adjoining annular segments (17).

16. A rudder bearing (10), in particular upper rudder carrier bearing (10), for mounting a rudder stock (50) or a rudder trunk (51) of a rudder of a watercraft, in particular a ship,
**characterized in that**
the rudder bearing (10) has a bearing element (15a, 15b, 13a, 13b) according to any one of the preceding claims.

17. The rudder bearing according to claim 16,
**characterized in that**
an axial bearing (15) of the rudder bearing (10) and/or a radial bearing (13) of the rudder bearing (10) comprises the bearing element (15a, 15b, 13a, 13b), wherein in particular the axial bearing (15) and/or the radial bearing (13) is configured as a self-lubricating bearing.

## Revendications

1. Élément de palier, à savoir une bague de palier (15a, 15b) ou un coussinet de palier (13a, 13b) d'un palier de gouvernail (10) pour supporter une mèche de gouvernail (50) ou une jaumière (51) d'un gouvernail d'un navire, sachant que le palier de gouvernail (10) est conçu en tant que palier radial (13) ou en tant que palier axial (15),
sachant que l'élément de palier (15a, 15b, 13a, 13b) est segmenté et comprend au moins trois segments annulaires séparés (17) qui sont agencés respectivement en un élément de palier (15a, 15b, 13a, 13b) homogène fixe en soi, sachant que les segments annulaires (17) individuels reposent respectivement sur deux autres segments annulaires (17) et sachant que les segments annulaires (17) sont reliés entre eux via des moyens de liaison.

2. Élément de palier selon la revendication 1,
**caractérisé en ce que**
l'élément de palier (15a, 15b, 13a, 13b) présente une pluralité de segments annulaires (17), en particulier 5 à 100 unités, de préférence 10 à 65 unités, de préférence particulièrement 15 à 40 unités.

3. Élément de palier selon la revendication 1 ou 2,
**caractérisé en ce que**
les moyens de liaison sont conçus pour créer une liaison par complémentarité des formes et/ou adhérence des forces entre les segments annulaires (17), sachant que de préférence les moyens de liaison comprennent des moyens élastiques pour créer une liaison par adhérence des forces.

4. Élément de palier selon l'une des revendications précédentes,
**caractérisé en ce que**
les moyens de liaison présentent une liaison par encliquetage, comprenant en particulier un évidement (186), et une contrepartie (185) correspondante.

5. Élément de palier selon l'une des revendications précédentes,
**caractérisé en ce que**
les moyens de liaison comprennent des évidements (176, 186) dans les segments annulaires (17) et des contreparties (175, 185) pouvant être insérées par complémentarité des formes et/ou adhérence des forces dans l'évidement (176, 186).

6. Élément de palier selon la revendication 5,
**caractérisé en ce que**
les contreparties (175) sont prévues respectivement sur un segment annulaire (17) ou que les contreparties (185) sont formées pour se mettre en prise dans au moins deux évidements (176) de segments annulaires (17) voisins.

7. Élément de palier selon la revendication 6,
**caractérisé en ce que**
les contreparties (175, 185) présentent au moins une contre-dépouille (1753), sachant que les contreparties (175, 185) présentent de préférence une partie d'extrémité en queue d'aronde.

8. Élément de palier selon la revendication 6 ou 7,
**caractérisé en ce que**
chaque segment annulaire (17) présente un même nombre, en particulier deux, d'évidements (176) et de contreparties (175), sachant que les évidements (176) et les contreparties (175) d'un segment annulaire (17) sont disposés de préférence les uns en face des autres.

9. Élément de palier selon l'une des revendications 6 à 8,
**caractérisé en ce qu'**
une cavité, un évidement ou une percée est prévu(e) dans la contrepartie (175,185).

10. Élément de palier selon l'une des revendications précédentes,
**caractérisé en ce que**
les segments annulaires (17) sont conçus avec une arête (172) intérieure, arquée ou linéaire, une arête (171) extérieure, arquée ou linéaire et deux arêtes (173, 174) latérales, essentiellement linéaires.

11. Élément de palier selon la revendication 10,
**caractérisé en ce que**
les deux arêtes latérales (173, 174) d'au moins un, de préférence plusieurs, des segments annulaires (17) sont en angle (α) les unes par rapport aux autres, en particulier de façon à ce que l'arête intérieure (172) soit plus courte que l'arête extérieure (171), sachant que de préférence, une des arêtes latérales (173, 174) est presque en angle droit avec les arêtes intérieure et extérieure (171, 172).

12. Élément de palier selon l'une des revendications précédentes,
**caractérisé en ce qu'**
un ou plusieurs, de préférence tous les segments annulaires (17) de l'élément de palier (15a, 15b, 13a, 13b) comprennent un matériau qui présente un lubrifiant solide et/ou
qu'un ou plusieurs, de préférence tous les segments annulaires (17) de l'élément de palier (15a, 15b, 13a, 13b) comprennent un matériau non-métallique, présentant de préférence des propriétés élastiques, en particulier un plastique, et sont de préférence intégralement fabriqués dans le matériau non-métallique.

13. Élément de palier selon l'une des revendications précédentes,
**caractérisé en ce que**
l'élément de palier (15a, 15b, 13a, 13b) présente une compression de surface admissible élevée, en particulier d'au moins 40 N/mm², de préférence d'au moins 75 N/mm², particulièrement de préférence d'au moins 90 N/mm².

14. Élément de palier selon l'une des revendications précédentes,
**caractérisé en ce qu'**
un ou plusieurs, de préférence tous les segments annulaires (17) sont composés d'un matériau qui comprend une composante A et une composante B, sachant que la composante A est un polyester thermoplastique et la composante B est en particulier un matériau élastique, un élastomère de préférence, sachant que le matériau est composé de préférence d'au moins 70 %, particulièrement de préférence d'au moins 85 % de la composante A.

15. Élément de palier selon l'une des revendications précédentes,
**caractérisé en ce que**
dans une zone limite dans laquelle respectivement deux segments annulaires (17) sont adjacents l'un à l'autre, un évidement (177) est prévu dans un ou dans les deux des segments annulaires (17) adjacents l'un à l'autre.

16. Palier de gouvernail (10) en particulier palier supérieur d'appui de gouvernail (10), pour l'appui d'une mèche de gouvernail (50) ou d'une jaumière (51) d'un gouvernail d'un navire, en particulier d'un bateau,
**caractérisé en ce que**
le palier de gouvernail (10) présente un élément de palier (15a, 15b, 13a, 13b) selon l'une des revendications précédentes.

17. Palier de gouvernail selon la revendication 16,
**caractérisé en ce qu'**
un palier axial (15) du palier de gouvernail (10) et/ou un palier radial (13) du palier de gouvernail (10) comprend/comprennent l'élément de palier (15a, 15b, 13a, 13b), sachant qu'en particulier, le palier axial (15) et/ou le palier radial (13) est formé en tant que palier autolubrifiant.
